# EUROPEAN PATENT APPLICATION

(11) **EP 2 199 191 A1**
(43) Date of publication of application: **23.06.2010**
(21) Application number: 09006847.9
(22) Date of filing: 20.05.2009
(51) Int. Cl.: B62D 43/00, B62D 43/04

(54) **Automatic and semi automatic vertical delivery, carrying, and installation of automobile spare tire system**

(30) Priority: 26.11.2008 IR 38709334
(71) Applicant: Muhammadi, Muhammad, Piruzi St. Tehran 1766874861 (IR); Tehrani, Ali Reza Asi, Piruzi St. Tehran 1766874861 (IR)
(72) Inventor: Muhammadi, Muhammad, Piruzi St. Tehran 1766874861 (IR)
(74) Representative: Grünecker, Kinkeldey, Stockmair & Schwanhäusser Anwaltssozietät

(57) **Abstract**

This invention is about a system that holds spare tire (1) in heavy and light weight vehicles, and when it is activated, detaches it from where it is fastened horizontally, and delivers it outside to the driver in vertical position in relation to the ground by using an automatic mechanism consisting of mechanical arms (2) and joints (3,4).

## Description

### Technical Background:

This invention deals with a system that holds spare tires in light and heavy vehicles.

When it is activated, mechanical arms and joints, automatically release the tire from where it is stored horizontally and delivers it vertically in relation to the ground, to the operator outside the vehicle.

In addition, where it is needed, two carriages are provided to facilitate the exchange and handling of the flat tire with the spare tire.

### General Applications:

### A - Passenger Vehicles

In most passenger cars, the spare tire is placed in a basket under the trunk floor.

In some models, for added security, the tire has been moved inside the trunk. Where such move creates complications as the ones listed below when changing tires:
- You need to unload and reload the stuff in the trunk in order to access the spare tire.
- Possibility of sustaining spinal cord injury due to the improper exit channel of the spare tire.
- Polluting the trunk by letting the tire come into contact with it.
- Need to spend more money to make deep compartments.
- Trunk may not be used for the purpose intended.

One of the major problems associated with the installation of spare tire is pulling the tire out from where it is situated horizontally and turning it vertically to install on the car, where by doing so; the operator is vulnerable to sustain spinal cord injuries.

This invention addresses this problem by automatization of pulling out the tire, turning it vertically, and delivering it to the operator outside the vehicle.

### B - Heavy Vehicles

In heavy vehicles such as buses, trucks, trailers, the spare tire weighs about 150 Kg, and rotating the tire from its horizontal position to vertical position is a much harder task.

With respect to the heavy vehicles, in addition to the standard equipments, two carriages are designed also for handling and installation of the spare tire.

In addition, in some heavy vehicles and SUVs, the spare tire is attached vertically to the vehicle, where lifting such heavy load off the ground and attaching it to a height by the operator is a very dangerous task.

This invention is intended to address this problem also by automatization of this process.

How it functions

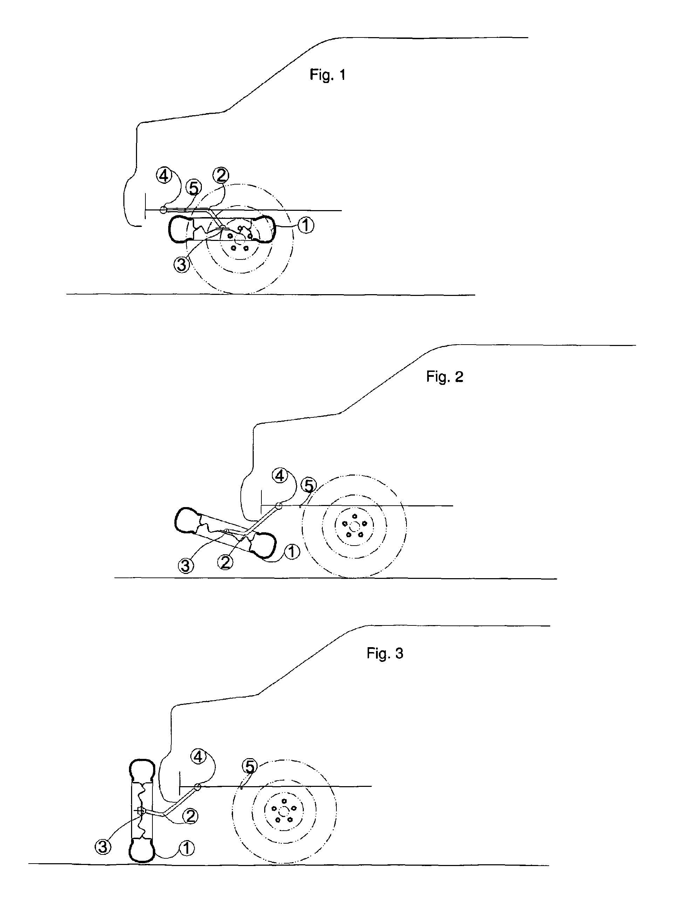

### A - Light Vehicles (Figures 1 to 3)

- In this type of vehicles, as illustrated on the figure 1, the spare tire (1), is attached underneath the vehicle by arms (2), and joints (3, 4).
- In order to release the spare tire, the operator must first release the mechanical safety catch (5) inside the trunk.
- This safety catch is intended to prevent the tire from being released when the car is in motion.
- The operator activates the system by pressing a button in the trunk.
- The system moves arm (2) up to position ( figure 2), rotates it around axis (4) and stops there.
- At this time axis (3) is activated to rotate the tire in vertical position, and stops (3).
- After changing the spare tire, the operator activates the return button, where by changing direction of the motor, returns the spare tire to (figure 1) position.
- The safety catch will lock itself automatically.

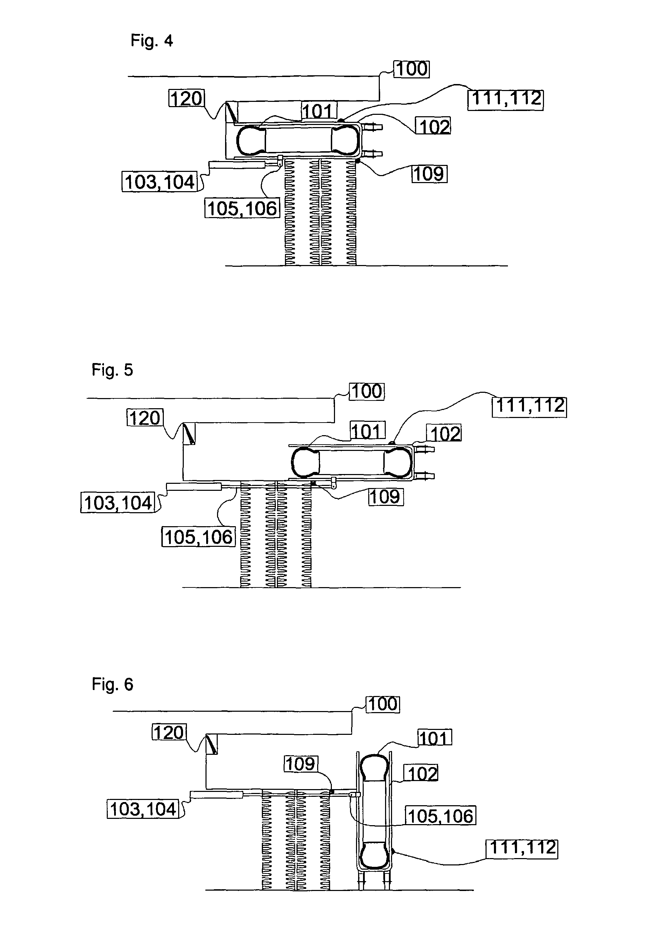

### B - Heavy Vehicles (Figures 4 to 6)

Due to the heavy weight of spare tires in this type of vehicles, it was impossible to use mechanical arm system. Instead a mechanical drawer was used.

In addition, to facilitate the movement of the spare tire from where it is situated to the wheels, and return of the flat tire to the place where it should be fastened, two carriages are provided, where, one has the task of carrying the spare tire to the wheel, and the other one has the task of returning the flat tire to the place where it should be set.

In this method, the spare tire (101), situated in the position shown in figure 4, is placed in the mechanical drawer (102), then carriages (103) and (104) are attached to either side of the tire.

The mechanical catch of (120) is intended to prevent unintentional activation of the system while the vehicle is in motion. Consequently the operator must release that prior to activation of the system.

An electric motor or pneumatic or hydraulic jacks will activate the two arms (105 & 106) that attach the two carriages to the chassis of the vehicle and drive the carriages to the point shown in figure 5 outside the drawer.

At this point the carriage changes direction due to its heavy weight, rotates around axis (109), and comes into the vertical position as shown in figure 6.

By releasing latches # 111 & 112, the carriage is released and the tire is ready to be delivered. At this time the flat tire is attached to one of the released carriages & the spare tire on the other carriage is installed on the wheel.

When the tire replacement is over, the carriages are inserted into each other again and locks # 111 & 112 will keep them together again.

At the command of the operator, arms # 111 & 112 will act in reverse, turn the wheel into horizontal position, and drive it into its compartment. horizontal position, and drive it into its compartment. At the command of the operator, arms # 111 & 112 will act in reverse, turn the wheel into horizontal position, and drive it into its compartment.

At the command of the operator, arms # 111 & 112 will act in reverse, turn the wheel into horizontal position, and drive it into its compartment. At the command of the operator, arms # 111 & 112 will act in reverse, turn the wheel into horizontal position, and drive it into its compartment. At the command of the operator, arms # 111 & 112 will act in reverse, turn the wheel into horizontal position, and drive it into its compartment. At the command of the operator, arms # 111 & 112 will act in reverse, turn the wheel into horizontal position, and drive it into its compartment. At the command of the operator, arms # 111 & 112 will act in reverse, turn the wheel into horizontal position, and drive it into its compartment. At the command of the operator, arms # 111 & 112 will act in reverse, turn the wheel into horizontal position, and drive it into its compartment. At the command of the operator, arms # 111 & 112 will act in reverse, turn the wheel into horizontal position, and drive it into its compartment.

### Advantages of the Invention:

- It prevents spinal cord injuries of the operator while changing spare tire.
- It increases ergonomic level and introduces new sets of safety and health standards with respect to changing tires especially while taking it out and replacing it.
- No need for the operator to come into contact with the spare tire where it is being unloaded and reloaded.
- No need to unload the cargo in the trunk to reach the spare tire.
- Improves the utilization and efficiency of the trunk.
- No need to store the spare tire in the trunk.
- Upgrading the safety and theft prevention of the spare tire.
- Prevents soiling of the stuff in the trunk.
- Reduces hand contact with the wheels.
- Speeds the process of changing tire.
- It makes it very easy for women and people with disability to change tire.
- It permits easy operation of the automatic system.
- Carrying the spare tire in a carriage in heavy & semi heavy vehicles.
- It prevents falling of the spare tire.
- Allows Installation of the spare tire on wheels by using a carriage in heavy & semi heavy vehicles.
- It will help the auto manufacturers to save money by eliminating the space usually allocated for the spare tire, which reduces production cost.

### Possible features of the system:

This system is invented for automatic retrieval of spare tire from where it is placed horizontally, change its direction vertically, and deliver it to the operator.

The claimed system can comprise:
A - Replacement & rotation mechanism that includes arm and mechanical joints
B - Power drive system that includes motor, gear box, and other power transfer elements
C - Mechanism power circuit that includes switch and micro control switches.

Mechanical activator - the item B - can be electric, pneumatic, or hydraulic.

When used in heavy vehicles, the claimed system can include two carriages for carrying and installation of the spare tire.

When used in semi - heavy vehicles, the claimed system can include one carriage for carrying and installation of the spare tire.

The system can include a mechanical safety catch that must be released manually by the operator. It is intended to prevent the spare tire from being released accidentally when the car is in motion.

The system can include a mechanical activator that makes it possible to release the spare tire in case of break down of the system.

The system may operate fully automatic, semi automatic, or manual.

## Claims

1. A system for automatic retrieval of a spare tire from where the spare tire is placed horizontally, changing its direction vertically, and delivering it to an operator, the system comprising:
a replacement and rotation mechanism which includes at least one arm and at least one mechanical joint,
a power drive system which includes a motor, a gear box, and/or other power transfer elements,
a mechanism power circuit which includes a switch and/or micro control switches.

2. The system according to claim 1,
**characterized in that**
the power drive system can be electric, pneumatic, or hydraulic.

3. The system according to one of the preceding claims,
**characterized in that**
the system includes two carriages for carrying and installation of the spare tire, particularly when used in heavy vehicles.

4. The system according to one of the preceding claims,
**characterized in that**
the system includes one carriage for carrying and installation of the spare tire, particularly when used in semi - heavy vehicles.

5. The system according to one of the preceding claims,
**characterized in that**
the system includes a mechanical safety catch that must be released manually by the operator for preventing the spare tire from being released accidentally when the car is in motion.

6. The system according to one of the preceding claims,
**characterized in that**
the system includes a mechanical activator that makes it possible to release the spare tire in case of break down of the system.

7. The system according to one of the preceding claims,
**characterized in that**
the system may operate fully automatic, semi automatic, or manual.
